(19) Europäisches Patentamt
European Patent Office
Office européen des brevets

(11) Publication number: **0 278 540 B1**

(12) **EUROPEAN PATENT SPECIFICATION**

(45) Date of publication of patent specification: **05.08.92** (51) Int. Cl.[5]: **E21B 43/26**, E21B 43/27

(21) Application number: **88200035.9**

(22) Date of filing: **13.01.88**

(54) **Composition and method for fluid loss control in acid fracturing of earthen formations.**

(30) Priority: **27.01.87 US 7409**

(43) Date of publication of application:
**17.08.88 Bulletin 88/33**

(45) Publication of the grant of the patent:
**05.08.92 Bulletin 92/32**

(84) Designated Contracting States:
**DE FR GB IT NL**

(56) References cited:
**GB-A- 2 163 790**
**US-A- 3 809 160**
**US-A- 3 978 928**

(73) Proprietor: **COMPAGNIE DES SERVICES DOWELL SCHLUMBERGER**
**20, rue Jean-Jaurès**
**F-92800 Puteaux(FR)**
(84) Designated Contracting States:
**FR**

(73) Proprietor: **PUMPTECH N.V.**
**Atlantic House Noorderlaan 147 Bus 5C**
**B-2030 Antwerpen(BE)**
(84) Designated Contracting States:
**DE GB IT NL**

(72) Inventor: **Crowe, Curtis W.**
**7055 E. 52nd Place**
**Tulsa Oklahoma(US)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

EP 0 278 540 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### BACKGROUND OF THE INVENTION

1. Field of the Invention:

This invention relates to a method of and composition for controlling fluid loss during acid fracturing of limestone and dolomite formations or the like. More specifically, the invention involves the reversible crosslinking of gelled acid by use of Fe(III), ferric form of iron, as the crosslinking agent and a delayed acting reducing agent to convert the Fe(III) to Fe(II) upon spending of the acid.

2. Description of the Prior Art:

The concept of intentionally decreasing the permeability of certain portions of a subterranean formation so that various treatment fluids will bypass these areas such as to selectively enhance the effective permeability of other portions of the subterranean formation is generally known and commercially practiced. Thus, various materials have heretofore been proposed and commercially used for the reduction of fluid loss from fracturing fluids, acidizing fluids, drilling muds and other fluids generally used in the treatment of wells. One particular technique of interest in the present invention is the use of an acidic fluid as a fracturing fluid.

A major problem in fracture acidizing is the tendency for the reactive fluid to selectively enlarge the larger pore spaces creating channels that are known as "wormholes". The fluid then leaks off perpendicularly to the fracture through these wormholes at a higher rate than non-reactive fluid (see for example a SPE publication 4549, by Nierode et al entitled "An Evaluation of Acid Fluid Loss Additives, Retarded Acids and Acidized Fracture Conductivity", September 30-October 3, 1973).

GB 2 163 790 describes gelled acid compositions for use in acidizing subterranean formations, comprising an aqueous acid, a water-soluble polymer and, optionally, a reducing agent such as sodium erythorbate.
Such compositions are aimed at preventing the precipitation of residues which is known to occur in the presence of ferric ions.

It has been found that acid fluid loss into permeable limestone occurs from wormholes rather than uniformly into the face of the core. These wormholes grow very rapidly in depth during the initial stages of acid leakoff with the rate slowing as the ultimate spending limited maximum depth is approached. During the early rapid wormhole growth period, very little acid leakoff occurs ahead of the wormhole tip. As a result, it is difficult for wall building fluids to form effective filter cakes. Gelled acids also provide limited fluid loss control since there is little chance for a viscous bank of spent acid to develop ahead of the wormhole and thus retard fluid loss until the wormhole growth rate slows. Thus, gelled acids generally show high spurt values but reasonably good fluid loss control during the later stages of fluid loss tests.

Thus, it appears that improved acid fluid loss control may be best achieved through the development of methods of limiting wormhole growth. The present invention is viewed as such a process.

### SUMMARY OF THE INVENTION

According to the present invention, it has been discovered that the fluid loss associated with the use of gelled acid in subterranean formations can be greatly reduced by the addition of Fe(III) in order to crosslink the acid during leakoff. It has been further discovered that the Fe(III) crosslinking of gelled acid can be reversed by the use of delayed acting reducing agents which convert Fe(III) to the Fe(II) form upon complete spending of the acid. The use of the temporary Fe(III) crosslinked gelled acid according to the present invention shows the greatest advantages over ordinary gelled acids in leakoff situations where deep wormhole development would ordinarily occur.

Thus, the present invention provides an aqueous acid composition having properties suitable for use in fracture acidizing subterranean formations comprising:

(a) an aqueous acid;

(b) a polymeric gelling agent that crosslinks in the presence of ferric ions at a pH of about 2 or greater; and

(c) a soluble ferric salt in an amount sufficient to crosslink said polymeric gelling agent at a pH of about 2 or greater, but which does not crosslink said polymeric gelling agent at a pH below about 2; and

(d) an effective amount of a soluble reducing agent that will reduce substantially all of the ferric ion to ferrous ion at a pH of about 2 or greater;

however excluding compositions based on a 28 % aqueous hydrochloric acid solution containing 3,000 ppm of ferric chloride, about 0.55 wt% of an acrylamide/methacryloylethyltrimethyl ammonium chloride copolymer and about 0.24 wt% of sodium erythorbate.

The method of fracture acidizing a subterranean formation penetrated by a bore hole comprising the step of contacting the subterranean formation, at a pressure and flow rate sufficient to create fracture acidizing of the formation, with a composition comprising:

(a) an aqueous acid;

(b) a polymeric gelling agent that crosslinks in the presence of ferric ions at a pH of about 2 or greater; and

(c) a soluble ferric salt in an amount sufficient to crosslink the polymeric gelling agent at a pH of about 2 or greater, but which does not crosslink the polymeric gelling agent at a pH below about 2.

The method of fracture acidizing further provides that the composition contains an effective amount of a soluble reducing agent that will reduce substantially all the ferric ion to ferrous ion at a pH of about 2 or greater.

In one particularly preferred embodiment, the acid employed is HCl; the polymeric gelling agent is a carboxyl-containing cationic polyacrylamide copolymer (92.5 mole % acrylamide and 7.5 mole % dimethylaminoethylmethacrylate quaternary); the ferric salt is $FeCl_3$ and the reducing agent is either hydrazine sulfate or hydroxylamine hydrochloride.

It is an object of the present invention to improve the fluid loss characteristics of gelled acid fracturing fluids. It is a further object to provide a gelled acid fracturing fluid that inherently and pontaneously blocks wormhole development in carbonaceous formations, thus reducing the fluid loss to a level approaching that of non-reactive fluids. It is still a further object to provide a gelled acid system which is crosslinked by Fe-(III) during leakoff, reducing acid fluid loss associated with wormhole development. And it is a further object to provide breaker systems for the crosslinking gelled acid that reverses the crosslinking and degrades the polymer. Fulfillment of these objects and the presence and fulfillment of additional objects will become apparent upon complete reading of the specification and claims taken in conjunction with the attached drawings.

## BRIEF DESCRIPTION OF THE DRAWINGS

FIGURE 1 illustrates the fluid loss of selected acid fracturing compositions as a function of time.

FIGURE 2 illustrates the fluid loss of selected acid fracturing compositions as a function of temperature.

FIGURE 3 illustrates the wormhole depth associated with selected acid fracturing compositions as a function of temperature.

FIGURE 4 is a plot of relative fluid loss as a function of temperature.

FIGURE 5 is a plot of relative wormhole depth as a function of temperature.

FIGURE 6 is a plot of apparent permeability of fractured cores as a function of confinement pressure.

FIGURE 7 is a plot of fluid loss for fractured cores as a function of temperature.

FIGURE 8 illustrates an acid spending test apparatus.

## DESCRIPTION OF THE PREFERRED EMBODIMENTS

According to the preferred embodiments of the present invention, gelled acid fracturing compositions and a method of using the same are provided where the gelled acid fracturing fluid is not crosslinked as it is pumped. However, as the acid begins to be spent by reaction (neutralization) by virtue of contact with the formation, the crosslinking of the gelled acid is promoted. This is accomplished according to the present invention by having the live (unspent) gelled acid contain, in addition to the carboxylate-containing polymer, ferric salts, i.e. Fe(III), and an organic reducing agent. The Fe(III) ions crosslink the carboxyl-containing polymer at a pH $\geqq 2$ (approximately in the range of 1.1 to 2.5 for one preferred polymer system, as illustrated later), while the reducing agent subsequently breaks the gel by reducing Fe(III) to Fe(II) as the pH increases and/or approaches neutrality. Optionally, a delayed action oxidizing agent (or, a free radical initiator) which is subsequently initiated after the Fe(III) reduction is accomplished, such as to further attack the polymer, thus further reducing the viscosity and enhancing the subsequent removal of the degraded fractionating fluid system from the well.

As previously indicated, the presence of larger pore spaces and in particularly, the development of so-called "wormholes" typically associated with fracture acidizing represents a serious problem when using gelled acids as the fracture fluid. According to the present invention, ferric ion is used to crosslink the carboxylate-containing polymer used as the gelling agent as the acid rapidly spends in the wormholes. This spontaneous crosslinking caused by the rise and pH blocks the wormhole, thus preventing further penetration of the acid. This in turn forces or directs the gelled acid fracturing fluid away from the crosslink gell filled wormhole, such as to further fracture and acid treat other regions of the subterranean formation.

As the pH rises or more specifically continues to rise (i.e., further neutralization of the acid), the reducing agent initially added to the gelled acid fracturing fluid proceeds to reduce the Fe(III) to Fe(II). This breaks the crosslinking and prevents precipitation of the iron as ferric hydroxide. Core testing of this concept confirms that the wormhole depth can be reduced to one-sixth and total leakoff is reduced by one-third to the order which non-reactive gelled acid exhibits.

The polymeric gelling agent according to the present invention can be any such material that is stable in an aqueous acid environment and that can be crosslinked in the presence of ferric ions at a pH of about 2 or greater. This will include any carboxyl-containing polymer as generally known in the art. Preferably and by way of example, but not limited thereto, such polymers as acrylamide (particularly partially hydrolyzed acrylamide polymers and copolymers), xanthan gums, carboxymethyl cellulose, carboxyhydroxymethyl cellulose, carboxymethylhydroxypropyl guar and related gums or polymers having pendant carboxyl groups to which the Fe(III) can crosslink. One particularly preferred gelling agent according to the present invention is a cationic acrylamide emulsion involving a copolymer of 2.5 mole % acrylamide and 7.5 mole % dimethylaminoethylmethacrylate quaternary acid salt.

The acid employed according to the present invention can be any acid generally used in fracture acidizing, including by way of example, but again not limited thereto, HCl, HBr, HF and mixtures thereof, other mineral acids and the like. Preferably, HCl solution of up to about 28% or even greater is to be employed.

The crosslinking agent according to the present invention can be generally any source of ferric ion. Soluble ferric salts such as $FeCl_3$, $Fe(NO_3)_3$, FeBr, or the like are preferred. It has been found that as little as 25 ppm Fe(III) has a pronounced effect on wormhole growth. The upper limit of Fe(III) concentration can in principle approach saturation or the solubility limits of the system provided sufficient reducing agent is present to reverse the crosslinking of the polymer after spending of the acid. Preferably, the limits of Fe(III) would be from about 100 to about 1000 ppm.

The reducing agent to be used according to the present invention can generally be any such composition that effectively converts the Fe(III) to Fe(II) at spend acid condition, but is ineffective in live acid. Preferably, hydrazine and hydroxylamine salts are employed. As such, hydroxylamine hydrochloride is preferably used at lower relative temperatures while the less active hydrazine sulfate is employed at elevated temperatures. Preferably, enough reducing agent should be added to reduce all of the Fe(III) present. In actual practice, a considerable excess of reducing agent should probably be used to insure complete reversal of the crosslinking process and to reduce any additional Fe(III) which may be picked up from the treating equipment and formation minerals.

It is generally known that many acid gelling agents, such as xanthan polymers and cationic acrylamides, are deleteriously crosslinked by the ferric ion upon spending of the acid which, in turn, can result in formation damage. Thus steps are usually taken to prevent this crosslinking. Techniques normally employed include either chelation of the iron or the addition of reducing agents to convert any ferric iron to the ferrous form, hence inhibiting the crosslinking with the ferric ion.

Not withstanding the above consideration and the general deleterious effect of the ferric ion, the mechanism of acid fluid loss suggests the possible use of iron crosslinking as a means of improving acid fluid loss control. More specifically, when acid initially leaks off into the face of the fracture, spending is almost instantaneous due to the large amount of surface area to which the acid is exposed. Consequently, acid containing iron and a crosslinkable gelling agent would be instantly converted to rigid crosslinked gel at the point of leakoff. This should result in termination of wormhole growth and greatly reduced fluid loss. Since crosslinking does not occur until the acid spends to a pH of about 2, it should be possible to later break the crosslinked gel by means of reducing agents which are activated by the rise of pH as the acid spends. It is known that reducing agents, such as hydroxylamine hydrochloride and hydrazine sulfate, do not reduce ferric ion in live HCl but rapidly convert it to the ferrous form in spent acid. In view of this, a series of tests designed to test this proposed method of acid fluid loss control was performed.

Tests were performed using a gelled acid formulation composed of 15% HCl, 0.4% of a commercially available inhibitor based on pyridinium/quinolineum formulations with acetylenic alcohols, 75,6 ℓ/1000 cationic acrylamide emulsion (92.5 mole % acrylamide, 7.5 mole % dimethylaminoethylmethacrylate quaternary), 500 ppm Fe(III) and 2,5 kg/1000 sodium erythrobate. Although this concentration of sodium erythrobate would be adequate to reduce about 1000 ppm Fe(III) in spent acid, only about 250 ppm would be reduced prior to spending.

Thus about 250 pm Fe(III) would be available to temporarily crosslink the acid gelling agent. Results of these tests are shown in Table 1. As is seen, both fluid loss and wormhole penetration are highly dependent upon the age of the gelled acid with performance improving with time. This is apparently the result of acid hydrolysis of the cationic acrylamide and the creation of carboxyl groups which act as crosslinking sites for the Fe(III). Results of tests run after one hour are only slightly better than those observed when no Fe(III) is present. With increased hydrolysis time, both fluid loss and wormhole length decreased dramatically. Optimum polymer hydrolysis time is apparently between six and eighteen hours. This would be expected to vary, however, depending upon acid temperature and HCl concentration. An examination of test results shows that fluid loss of the iron crosslinked gelled acid is only about 37% that of the same gelled acid with no iron present. However, to achieve this low level of fluid loss it appears that commercial application of this system would require that the acid be premixed and the polymer allowed to hydrolyze for an appropriate period of time prior to pumping. As an alternative, a partially hydrolyzed acrylamide polymer could be substituted for the cationic acrylamide thus eliminating the need for extended polymer hydrolysis.

In order to study the effect of Fe(III) concentration upon fluid loss control of 15% HCl gelled with cationic acrylamide, an additional series of tests was performed. These tests were primarily performed to establish concentration limits. No reducing agent was used in these tests in order that the exact amount of active Fe(III) would be known. Results of these tests are shown in Table 2. The data show that Fe(III) has a pronounced effect on acid leakoff, even at concentrations as low as 25 ppm. While test results using 25 ppm Fe(III) showed only a slight improvement in actual fluid loss, a significant decrease in wormhole penetration distance was observed.

As was previously indicated, acrylamide type acid gelling agents preferrably should be either hydrolyzed by acid or partially hydrolyzed prior to their addition to the acid in order for Fe(III) crosslinking to take place. Xanthan polymers, however, can be crosslinked by Fe(III) in spent acid without hydrolysis of the polymer. For this reason, xanthan based acid gelling agents, such as a mixture of 83.3% xanthan polymer and 16.7% sodium erythrobate, would appear to be good candidates for use in Fe(III) crosslinkable gelled acid systems. To investigate this possibility a series of fluid loss tests was performed. The first tests in this series were designed to establish the fluid loss characteristics of acid gelled with the xanthan polymer sodium erythrobate mixture. Fluid loss test results, shown in Table 3, demonstrate that 15% HCl gelled with the xanthan polymer sodium erythrobate mixture has leakoff characteristics similar to acid gelled with cationic acrylamide. In contrast, the presence of Fe(III) in acid gelled with xanthan polymer provides no reduction in either acid fluid loss or wormhole depth. In the case of 15% HCl, gelled with xanthan polymer and containing 500 ppm Fe(III), fluid loss and wormhole development were worse than when no Fe(III) was present. Although the Fe(III) did crosslink the polymer, the resulting material had a mushlike consistency and none of the cohesive structure observed previously with Fe(III) crosslinked cationic acrylamide. A similar test was also performed with hydroxylamine hydrochloride, a delayed acting Fe(III) reducing agent, added. In this case no evidence of crosslinking was observed and test results were similar to those obtained when no Fe(III) was present. This would seem to indicate that the Fe(III) was reduced before crosslinking could occur.

Since the xanthan polymer did not show much promise as an iron crosslinkable acid gelling agent, the cationic acrylamide system was employed for more thorough evaluation. In order to determine the pH at which crosslinking of the spent acid occurred, a sample of gelled acid composed of 15% HCl, 75,6 ℓ/1000 cationic acrylamide and 500 ppm Fe(III) was spent using calcium carbonate powder. During spending, the pH of the acid was carefully monitored. The first indications of crosslinking were observed at a pH of 1.1 with complete crosslinking occurring at 2.5. Thus for purposes of this invention, the onset of crosslinking is described as occurring at about pH = 2 or greater.

Studies were next performed for the purpose of devising methods of breaking the crosslinked gels. In earlier fluid loss tests using sodium erythrobate as a breaker, it was noted that a large amount of crosslinked gel remained on the face of the core following the test. One of the disadvantages of sodium erythrobate is that it reduces a certain amount of available Fe(III) before the acid spends, thus limiting the amount of excess reducing agent which can be used. To overcome this problem alternate reducing agents, which reduce Fe(III) only in spent acid, were evaluated. Two materials which seemed to meet these requirements were hydroxylamine hydrochloride and hydrazine sulfate. In order to evaluate these materials, the reducing agents were added to solutions composed of 15% HCl, 75,6 ℓ/1000 cationic acrylamide and 500 ppm Fe(III). When the gelled acid solution containing the hydroxylamine hydrochloride was spent on marble, no evidence of crosslinking was observed. In the solution containing hydrazine sulfate only a brief period of partial crosslinking was noted. In spite of the largely negative results obtained in these tests, it was felt that spending would be much more rapid during actual acid leakoff thus presenting better conditions for Fe(III) crosslinking.

In order to evaluate the effect of various breakers on fluid loss, tests were performed using 15% HCl gelled with cationic acrylamide and containing 500 ppm Fe(III). Results of these tests are shown in Table 4. These studies show that good fluid loss and wormhole control was achieved in the presence of both hydroxylamine hydrochloride and hydrazine sulfate. In tests using hydroxylamine hydrochloride, some crosslinked gel remained in wormholes but there was considerable evidence of crosslink reversal. In tests using hydrazine sulfate as a breaker, good fluid loss control was obtained; however little evidence of crosslink breakage was noted. It is interesting to note that test results obtained using hydroxylamine hydrochloride, hydrazine sulfate and sodium erythrobate as breakers show lower fluid loss values than equivalent tests where no breaker is employed.

Tests were next performed to evaluate the performance of the temporary Fe(III) crosslinked acid system under conditions of varying differential pressure. It had been previously shown that some acid fluid loss control techniques were extremely sensitive to changes in differential pressure. This is believed to result from the development of wormholes during acid leakoff and the extreme influence of differential pressure upon wormhole development. In general, it is felt that for maximum effectiveness a system should perform over a wide range of differential pressure since the effective differential pressure is usually not known and may vary greatly depending upon well conditions. To examine the effect of differential pressure upon fluid loss of the Fe(III) crosslinked gelled acid system, tests were performed at initial leakoff flow rates of 0.5, 1.0, and 2.0 ml/min. As is seen in Table 4, no abrupt increase in acid fluid loss occurs as the differential pressure in increased. The effectiveness of this system over a wide range of differential pressure is believed to result from the ability of the Fe(III) crosslinked system to block wormhole growth.

A series of test was performed in order to evaluate the performance of the temporary crosslinked gelled acid system in 28% HCl. Results of these tests are shown in Table 5. Examination of these data reveals that Fe(III) crosslinking of the spent gelled acid does reduce fluid loss and limits wormhole growth. The effect of Fe(III) crosslinking is, however, much more pronounced in tests performed at an initial leakoff flow rate of 1.0 ml/min than in similar tests at 0.5 ml/min. This is probably due to the fact that wormhole development occurs more rapidly at the higher leakoff rate. As a result, one might expect crosslinking to be more beneficial at higher leakoff rates since its primary function is the limitation of wormhole growth. As part of this study, tests were performed at temperatures of both 66°C and 93°C. While Fe(III) crosslinking significantly reduced fluid loss in 66°C tests, it had little effect in equivalent tests at 93°C. In the 93°C tests, both fluid loss and wormhole length were similar to those obtained when no Fe(III) was present. Since in these tests it appeared that no crosslinking had occurred, it was reasoned that, at the higher temperature, the hydroxylamine hydrochloride might have reduced the Fe(III) before crosslinking could take place. To examine this possibility, similar tests were performed without the hydroxylamine present. These tests resulted in greatly reduced wormhole depth and some reduction in fluid loss thus indicating that premature Fe(III) reduction was in fact the problem. The relative amount of fluid loss reduction, however, was not as great as in similar tests at 66°C. Again, this can be explained by the fact that wormhole growth is less of a problem at the higher temperature and thus crosslinking of the spent acid would be expected to exert a lesser influence. In general, it is observed that crosslinking offers the greatest advantage in situations where deep wormhole penetration would normally occur.

These test results also show that hydroxylamine hydrochloride cannot be used as a delayed crosslink breaker at temperatures of 93°C and above. At the higher temperatures, however, it is possible to substitute a less active reducing agent such as hydrazine sulfate.

In view of the present discovery that the Fe(III) gelled acid system exhibits an unusual ability to control development of wormholes during acid leakoff and since the creation of these wormholes greatly reduces the efficiency of acid fracturing fluids, the greatest advantage of the Fe(III) crosslinked system should be observed under treating conditions in which deep wormhole development would normally occur. Since wormhole penetration is spending limited, conditions such as low temperature, high permeability and large differentials between fracturing and the bottom hole pressure should promote deep wormhole penetration. Thus, wells exhibiting these characteristics are felt to be the best candidates for treatment with the Fe(III) crosslinked system.

In order to demonstrate and verify the above, a series of tests were performed measuring the hydraulic efficiency of various aqueous fracturing fluids against limestone cores. The fluid loss tests were conducted on one inch diameter, six inch long Indiana limestone cores. The permeability of these cores varied from 0.5 to approximately 10 md. Typically, the cores were saturated with API brine and placed in a Hassler sleeve apparatus. Pressure of 88 bars was applied to the sleeve and nitrogen drive pressure of 58,7 bars was applied to the fluid reservoir. Flow rate of API brine was measured to determine core permeability after constant flow had been established. Fluid loss tests were first run with a pad fluid for 30 minutes. This was followed by a similar test with the acid containing fluid. An acid fluid loss test was considered successful if the acid did not penetrate the core in 30 minutes.

Fluid loss tests were performed at 66°C on 15% HCl; 15% HCl gelled with 2% (by volume) of a cationic acrylamide emulsion (92.5 mole % acrylamide, 7.5 mole % dimethylaminoethylmethacrylate quaternary); and 15% HCl gelled with 2% (by volume of the same cationic acrylamide emulsion containing 500 ppm Fe(III) (ferric chloride). For comparisons with a non-reactive fluid, a fluid loss test was also performed using water gelled with 2% (by volume) of the above cationic acrylamide emulsion. Results of these tests are shown in Figure 2. As seen from the data, the fluid loss of the 15% HCl is poor; however, somewhat better than might be expected from a non-reactive fluid. This is apparently due to the higher viscosity of the spent acid, as compared to water, as well as carbon dioxide blockage. At the temperature and pressure of the tests, the carbon dioxide generated during acid spending is considerably in excess of that soluble in the spent acid.

As also seen from the data, when comparing the fluid loss of water and 15% HCl, both gelled with 2% (by volume) of the cationic acrylamide emulsion, the fluid loss of the gelled acid was over twice that of the comparable nonreactive gelled fluid. This difference is attributed to the influence of wormhole development occurring during gelled acid leakoff. The fluid loss data associated with the gelled acid system, containing Fe(III) according to the present invention further confirm the significance of the wormhole by controlling wormhole development which reduces the fluid loss to almost the level of gelled water.

Since development of wormholes has a pronounced effect on the hydraulic efficiency of acid fracturing fluids, reservoir conditions affecting the development of wormholes will in turn influence acid fluid loss. For example, higher temperatures produce accelerated spending of acid which shortens maximum wormhole depth. In order to verify the effect that temperature has on fluid loss and wormhole penetration, a series of tests were performed at temperatures ranging from 38°C to 93°C. The fluids tested included inhibited 15% HCl; 15% HCl gelled with 2% (by volume) of the cationic acrylamide emulsion (92.5 mole % acrylamide, 7.5 mole % dimethylaminoethylmethacrylate quaternary); and 15% HCl gelled with 2% (by volume) of the cationic acrylamide and containing 500 ppm Fe(III) and 0.24% hydrazine sulphate. The results of these fluid loss tests are shown in Figure 2. The fluid loss values represent leakoff volumes observed during a 30 minute fluid loss test performed at an initial leakoff velocity of 1.0 ml/min.

As seen in Figure 2, increased temperature decreases fluid loss for all three acid formulations. In the case of the 15% HCl, the decrease in fluid loss with increased temperature can be explained by the shorter wormhole depths produced and by the increased carbond dioxide blockage resulting from this reduced solubility and increased gas volume at elevated temperatures. As further seen in Figure 2, increased temperatures improved the performance of both the gelled acid and the temporary Fe(III) crosslink gelled acid systems. However, increasing the temperature produces a greater relative improvement in the simple gelled acid, with its performance at 93°C equalling that of the crosslink system. Again, this can be explained by wormhole growth considerations. Figure 3 presents a plot of the wormhole depth versus test temperatures for the three acid formulations. As shown, although the crosslink system performs much better at the low temperatures, increasing the temperature narrows the performance difference between the two systems. At 93°C, the wormhole depth for the gelled and crosslink gelled acid systems are about the same. This data again demonstrates that the improved crosslink systems according to the present invention function by virtue of their ability to block wormhole growth.

Figure 4 shows a plot of the same fluid loss data presented in a somewhat different manner, in that the relative fluid loss is plotted against test temperature. Relative fluid loss is defined as percent fluid loss as compared to that of the ungelled acid under the same test conditions. Data presented in this manner provides a more easily visualized representation of the relative hydraulic efficiency of the three acid systems. Figure 5 is a similar plot showing relative wormhole depth versus temperature; relative wormhole depth being the percent penetration distance as compared to ungelled 15% HCl.

In comparing the 15% HCl data to the previous 28% HCl data, similar performance trends were observed. Tests performed at 150°F showed fluid loss of the Fe(III) crosslinked system to be only about half that of the same formulation without Fe(III). However, at 93°C, fluid loss of the two systems was about equal.

Most carbonate formations exhibit limited matrix permeability and depend primarily on natural fractures for their producing capacity. Such fractures seriously complicate the problem of acid fluid loss control. Natural fractures are easily enlarged by the treating acid, greatly increasing localized fluid loss. To achieve deep fracture penetration during acidizing treatments, it is important that fluid loss to both matrix permeability and natural fractures be effectively controlled.

To investigate acid fluid loss to natural fractures, a new method of fluid loss testing was developed. The test procedure was identical to previously described one inch by six inch long Indiana limestone core procedure, except that cores used in the study had fractures centered along their lengthwise axis. These cores were prepared by first cutting small blocks of Indiana limestone measuring 5 cm by 5cm by 15 cm. These blocks were then notched to a depth of about, 6 mm on opposing sides, using a core saw. Lengths of 6 mm stainless steel tubing, whose diameter was slightly larger than the notches, were centered in each notch. Pressure was then applied to the tubing using a shop vise. This pressure was slowly increased until the specimen fractured under tension. A 2,5 cm diameter core, with a fracture centered along its length, was then drilled from the fractured block. To prevent preferential channeling of acid along the interface between the fracture and the Hassler sleeve, the outside edges of the fracture were coated with silicone rubber. The apparent permeability of cores, prepared using this technique, was about double that of nonfractured cores. Permeability was, however, somewhat dependent on confinement pressure and could be varied by changing the pressure applied to the Hassler sleeve. Figure 6 shows a plot of apparent permeability, of one of these fractured core, versus confinement pressure. As is seen, permeability declines with increased sleeve pressure. Much of this lost permeability was recoverable, however, by lowering the sleeve pressure.

Results of fluid loss tests, performed using fractured cores, are presented in Figure 7. In general, test results are similar to those obtained earlier using ordinary cores. The Fe(III) crosslinked system again performed best at low to moderate temperatures. Performance of cationic acrylamide gelled acid improved with temperature, providing fluid loss control equivalent to the crosslinked system at 93 ° C. The major difference seen in comparing test results using fractured and nonfractured cores was in the comparative, low temperature, performance of the Fe(III) crosslinked versus simple gelled acid systems. The crosslinked system performed extremely well against fractures as compared to other acid systems. This is an important advantage since fluid loss to natural fractures is probably a greater problem when acidizing carbonate formations. The crosslinked system exhibited an unusual ability to block wormhole development in existing fractures. It was difficult to obtain low temperature comparative results since other acid formulations tended to channel completely through the core during the test.

A major consideration in the evaluation of any gelled acid system is the condition of the spent acid and its ease of recovery following the treatments. This is especially true of crosslinked systems where the potential for formation damage is much greater. Thus, it is very important that the question of formation damage be carefully addressed prior to any field testing of the Fe(III) crosslinked system.

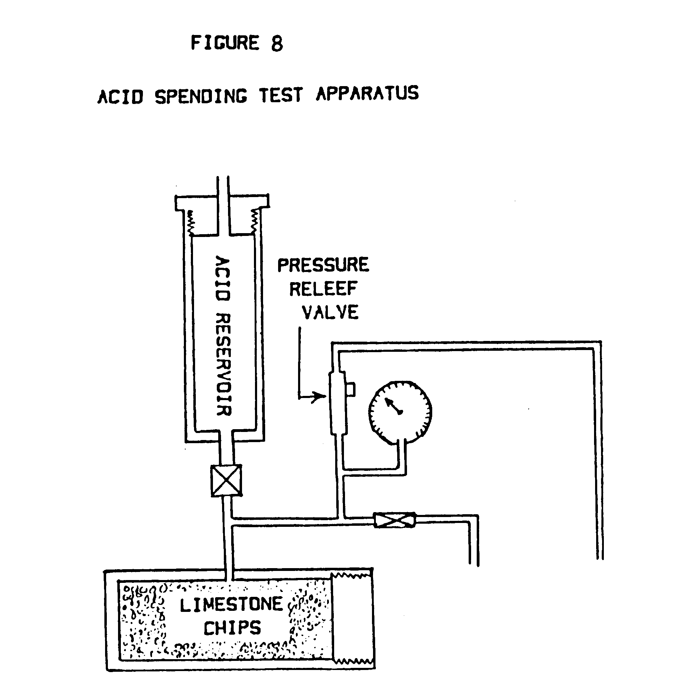

In order to demonstrate that reducing agents, such as hydroxylamine hydrochloride and hyrazine sulfate, are capable of reversing Fe(III) crosslinking of spent gelled acid, a series of tests were performed. To simulate well conditions, the spending tests were performed under pressure and at temperatures representative of well conditions. To accomplish this, a high pressure, heated, cell packed with limestone chips was used. In this manner, static spending of the acid was simulated with the carbon dixoide generated retained in solution. To prevent reduction of Fe(III) by the walls of the stainless steel cell, the interior of the vessel was coated with Teflon. A diagram of the equipment used in these tests is shown in Figure 8.

In these tests, the spending cell was first filled with limestone chips and preheated to the desired temperature. The test solution was then placed in the acid reservoir and the reservoir pressurized with nitrogen to 58,7 bars. The test was begun by opening the valve between the acid reservoir and spending cell. Once the cell, containing the limestone chips, was filled and pressurized, the valve was closed and the acid allowed to spend. Tests were run for a period of 6 hours at 66 ° C. At the end of this time, the pH of the spent acid was about 4.5. This is well above the level where Fe(III) crosslinking occurs. The spent acid was then bled from the cell and the cell contents examined for evidence of polymer crosslinking. Results of these spending tests are shown in Table 6.

As seen in Table 6, none of the spent acid, bled from the reaction cell, showed evidence of crosslinking. However, these observations are somewhat deceptive. As the spent acid flows from the cell, a small amount of live acid, trapped in the flow lines of the equipment, becomes mixed with the spent acid. This is evident by the low pH of the returned psent acid which flows from the cell. In contrast, the pH of the spent acid remaining in the cell itself was always about 4.5. Thus, the conditions of the residual acid remaining in the reaction cell gives much better indication of the actual condition of the spent acid.

Without the reducing agent, a certain amount of crosslinked gel always remained in the reaction cell. With the reducing agent, no indication of gel crosslinking was seen.

During these acid spending tests, it was observed that the viscosity of the spent acid was usually less than that which would be expected for the same system. Part of this can be attributed to shear degradation of the polymer during injection and bleed back from the reaction cell. Howeever, another possible explanation involves polymer degradation by oxygen trapped in the cell. It is known that reducing agents, such as erythrobic acid and hydrazine salts, act as breakers for some polymers and that this polymer degradation seems to be related to the level of dissolved oxygen. Thus, it would appear that oxygen, present in the reaction cell, might have an influence on gel stability. Assuming that the volume of air present in the cell is equal to the volume of acid injected, it can be calculated that about 300 ppm oxygen would be available for reaction with the polymer. This is far in excess of the 6 ppm oxygen normally dissolved in 15% HCl exposed to the atmosphere.

To examine the influence of trapped air upon spent acid viscosity, tests were run in the normal manner and results compared with those from similar tests in which oxygen was previously purged from the reaction cell. This oxygen was removed by repeated pressurization to 29 bars with nitrogen followed by release of the pressure. As is seen in Table 6, the removal of this oxygen has a major effect on the viscosity of the spent acid. In fact, the influence of oxygen is so pronounced that it suggests its possible use as a breaker for spent gelled acid.

While injection of air or oxygen into treating acid, containing a reducing agent, is contemplated as a possible method of degrading acid gelling agents, a more practical approach according to the present invention is the addition of an oxidizing agent to the acid along with the reducing agent.

In an attempt to evaluate this approach, a spending test was performed using 15% HCl, gelled with 75,6 ℓ of the previously described cationic acrylamide emulsion and containing 500 ppm Fe(III), 10 kg hydrazine sulfate, and 2,5 kg ammonium persulfate. Results of this test were negative, with no evidence of gel degradtion by the oxidizer. However, observing the mixing of the acid, it was noted that gas evolution, probably nitrogen, occurred immediately upon addition of the ammonium persulfate. This indicates that hydrazine and ammonium persulfate react very rapidly when mixed in acid. Therefore, for gel breakage to take place, the reaction between the oxidizer and reducer must be delayed until the acid is nearly spent. This can be acomplished in much the way that acid prevents the reduction of Fe(III) by reducing agents until the acid is spent.

Since ammonium persulfate seemed to react rapidly with hydrazine sulfate in acid solution, a less active oxidizing agent, such as hydrogen peroxide, was tested to see if it was more effective. As such, the above test was repeated with hydrogen peroxide as the oxidizing agent. In this case, spending of the acid, under anaerobic conditions, resulted in considerable loss of viscosity. This indicates that such an approach to viscosity reduction of spent acid gels is practical; provided that the spent acid gel does not break too rapidly such that it does not adversely affect fluid loss control..

The above tests also suggest the possibility of a combination of oxidizing and reducing agents, whose reaction is triggered by spend of the acid, be used to degrade these polymers.

In such an approach, the oxidizing and reducing agents must be matched so that their reaction does not occur prior to spending of the acid. Next, the presence of the oxidizer should not affect, to a great degree, the stability of the gelling agent in live acid. And finally, degradation of the polymer should not occur so rapidly that it adversely affects the ability of the gelled acid to control fluid loss. This approach involves the injection of oxidizing and reducing agents in separate stages with polymer degradation being triggered by commingling of fluids during flow back following the treatment. For example, the oxidizing agent could be added to the pad fluid which precedes the gelled acid. The gelled acid, itself, would contain only the reducing agent. The pad fluid would initially create the fracture leaving a zone of oxidizer solution in the rock matrix adjacent the fracture face. Flow back would result in oxidizer and reducer commingling in the fracture and the rapid degradation of any gelling agent present.

The advantages and benefits associated with the present invention are viewed as numerous and significant. By virtue of the formation of a temporary barrier in a developing wormhole as the acid spends, the barrier stops the growth of the wormhole while its depth is very shallow. The result is that the leakoff becomes more uniform across the fracture face and tends to resemble the fluid loss performance of non-reactive fluid. This reduced fluid loss dramatically improves the fluid's efficiency which is then manifested in significantly longer fracture lengths, ultimately resulting in improved production when compared to conventional acid treatments.

Having thus described the invention with a certain degree of particularity, it is to be understood that the invention is not limited to the embodiments set forth herein for purposes of exemplification, but is to be limited only by the scope of the attached claims, including a full range of equivalents to which each element thereof is entitled.

(X) → 75,6 l

**Table 1**

**EFFECT OF HYDROLYSIS TIME UPON FLUID LOSS OF 15% HCL GELLED WITH J429**
(Initial Leakoff Velocity = 1.0 ml/min)

| | Treating Fluid | Hydrolysis Time (hrs) | K (md) | Temp (°C) (~~°F~~) | Fluid Loss (ml) 1 | 4 | 9 | 16 | 25 | 36 | Wormhole Penetration (cm) |
|---|---|---|---|---|---|---|---|---|---|---|---|
| (X) | 15% HCl, ~~20 gal~~ J429, 5# L58, 0.4% A166 | 1 | 1.84 | 66 | 0.86 | 2.94 | 6.86 | 12.39 | 15.46 | 16.78 | 18.0 |
| (X) | 15% HCl, ~~20 gal~~ J429, 5# L58, 500 ppm Fe(III), 0.4% A166 | 1 | 1.34 | 66 | 0.79 | 2.71 | 5.82 | 8.71 | 11.35 | 13.66 | 6.0 |
| (X) | 15% HCl, ~~20 gal~~ J429, 5# L58, 500 ppm Fe(III), 0.4% A166 | 1 | 1.52 | 66 | 0.74 | 2.78 | 5.20 | 7.18 | 11.58 | 13.88 | 10.0 |
| (X) | 15% HCl, ~~20 gal~~ J429, 5# L58, 500 ppm Fe(III), 0.4% A166 | 3 | 1.17 | 66 | 0.93 | 2.98 | 5.43 | 7.35 | 9.47 | 11.27 | 3.5 |
| (X) | 15% HCl, ~~20 gal~~ J429, 5# L58, 500 ppm Fe(III), 0.4% A166 | 6 | 1.18 | 66 | 0.97 | 1.97 | 4.14 | 5.68 | 7.11 | 8.34 | 2.5 |
| (X) | 15% HCl, ~~20 gal~~ J429, 5# L58, 500 ppm Fe(III), 0.4% A166 | 18 | 1.64 | 66 | 0.64 | 1.63 | 2.90 | 4.18 | 4.85 | 6.24 | 1.5 |
| (X) | 15% HCl, ~~20 gal~~ J429, 5# L58, 500 ppm Fe(III), 0.4% A166 | 22 | 1.55 | 66 | 0.60 | 1.95 | 3.59 | 3.92 | 4.96 | 6.32 | 2.0 |

J429: 92.5 mole % acrylamide, 7.5 mole % dimethylaminoethylmethacrylate quaternary

L58: sodium erythorbate

A166: acid corrosion inhibitor based on pyridinium/quinolineum formulations with acetylenic alcohols

Table 2

EFFECT OF Fe(III) CONCENTRATION UPON FLUID LOSS OF GELLED ACID
(Inital Leakoff Velocity = 1.0 ml/min)
(Hydrolysis Time = 18 hrs.)
(Temp. = ~~160° F.~~ 66 °C)

| Treating Fluid | ppm Fe(III) | K (md) | Fluid Loss (ml) 1 | 4 | 9 | 16 | 25 | 36 | Wormhole Penetration (cm) |
|---|---|---|---|---|---|---|---|---|---|
| 15% HCl, ~~20 gal~~ 75,6 l J429, 5# L58 ~~0.4 gal~~ 1 l A166 | 0 | 1.51 | 0.97 | 2.90 | 5.85 | 9.44 | 14.26 | 16.57 | 14.0 |
| 15% HCl, ~~20 gal~~ 75,6 l J429, ~~0.4 gal~~ 1 l A166 | 25 | 1.54 | 0.86 | 2.66 | 5.41 | 9.23 | 12.56 | 15.62 | 6.0 |
| | | 1.64 | 0.83 | 2.76 | 5.51 | 8.70 | 12.29 | 15.15 | 6.0 |
| Average of Two Tests: | | | 0.85 | 2.71 | 5.46 | 8.97 | 12.43 | 15.38 | 6.0 |
| 15% HCl, ~~20 gal~~ 75,6 l J429, ~~0.4 gal~~ 1 l A166 | 50 | 1 68 | 0.80 | 2.89 | 5.69 | 9.33 | 12.98 | 16 50 | 3.5 |
| | | 1.16 | 0.79 | 2.47 | 4.99 | 7.87 | 10.55 | 12.86 | 2.5 |
| Average of Two Tests: | | | 0.79 | 2.68 | 5.34 | 8.60 | 11.77 | 14.68 | 3.0 |
| 15% HCl, ~~20 gal~~ 75,6 l J429, ~~0.4 gal~~ 1 l A166 | 100 | 0.92 | 0.98 | 3.05 | 5.96 | 8.64 | 10.99 | 13 18 | 2 0 |
| | | 1.52 | 0.85 | 2.74 | 5.42 | 7.83 | 10.41 | 13 30 | 2 0 |
| Average of Two Tests: | | | 0.92 | 2.90 | 5.69 | 8.24 | 10.70 | 13.24 | 2.0 |
| 15% HCl, ~~20 gal~~ 75,6 l J429, ~~0.4 gal~~ 1 l A166 | 500 | 1.13 | 0.91 | 2.89 | 5 42 | 7.97 | 10 67 | 12 90 | 2 5 |
| | | 0.93 | 0.94 | 2.66 | 5 13 | 7.26 | 10.01 | 12 79 | 2 0 |
| Average of Two Tests: | | | 0.93 | 2.78 | 5.28 | 7.62 | 10.34 | 12.85 | 2.3 |
| 15% HCl, ~~20 gal~~ 75,6 l J429, ~~0.4 gal~~ 1 l A166 | 1000 | 1.45 | 0.81 | 2.17 | 3 58 | 5 11 | 7.11 | 9 52 | 2 0 |
| | | 1.46 | 0.59 | 1.89 | 3.11 | 4 59 | 6.36 | 7.79 | 1 0 |
| Average of Two Tests: | | | 0.70 | 2.03 | 3.35 | 4.85 | 6.74 | 8.66 | 1.5 |

Table 3

EFFECT OF IRON CROSSLINKING UPON FLUID LOSS OF ACID GELLED WITH J312
(Initial Leakoff Velocity = 1.0 ml/min)
(Temp. = ~~150° F~~ 66°C)

| Treating Fluid | ppm Fe(III) | K(md) | Fluid Loss (ml) 1 | 4 | 9 | 16 | 25 | 36 | Wormhole Penetration (cm) |
|---|---|---|---|---|---|---|---|---|---|
| 15% HCl, 60# J360, ~~0.4 gal~~ 1l A250 | 0 | 1.45 | 1.00 | 3.98 | 8.98 | 12.71 | 15.41 | 17.12 | 17.0 |
| | | 1.42 | 0.99 | 3.98 | 8.92 | 13.82 | 16.80 | 19.52 | 19.0 |
| Average of Two Tests | | | 1.00 | 3.98 | 8.96 | 13.27 | 16.10 | 18.33 | 18.0 |
| 15% HCl, 50# J312, 20# hydroxylamine HCl, 0.4% A250 | 500 | 1.40 | 1.02 | 3.71 | 8.17 | 13.51 | 16.78 | 19.73 | 20.0 |
| 15% HCl, 50# J312, 0.4% A250 | 500 | 0.96 | 0.99 | 3.95 | 8.46 | 15.33 | 20.80 | 24.87 | 22.0 |

J360: 83.3% xanthan polymer, 16.7% sodium erythorbate

J312: xamtham polymer

A250:

Table 4

FLUID LOSS OF GELLED ACID CONTAINING VARIOUS BREAKERS
(15% HCl, ~~20 gal~~ 75,6 l J429, 500 ppm Fe(III), 0.4% A166)
(Hydrolysis Time = 18 hrs.)
(Temp. = ~~160° F~~ 66°C)

| Breaker | Concentration (~~lb/1000 gal~~ g/l) | K(md) | Initial Leakoff Velocity (ml/min) | Diff. Press. (~~psi~~ bars) | Fluid Loss (ml) 1 | 4 | 9 | 16 | 25 | 36 | Wormhole Penetration (cm) |
|---|---|---|---|---|---|---|---|---|---|---|---|
| Hydrolylamine hydrochloride | 2,4 | 2.24 | 1.0 | 16 | 0.66 | 1.69 | 3.33 | 5.08 | 6.77 | 8.57 | 2.5 |
| | | 1.50 | 1.0 | 24 | 0.88 | 2.53 | 4.78 | 6.95 | 8.46 | 9.17 | 2.0 |
| Average of two tests | | | | | 0.77 | 2.11 | 4.06 | 6.02 | 7.62 | 8.87 | 2.3 |
| Hydrazine sulfate | 2,4 | 1.73 | 1.0 | 21 | 0.87 | 2.21 | 3.74 | 5.26 | 6.27 | 7.53 | 2.5 |
| | | 1.78 | 1.0 | 20 | 0.61 | 2.31 | 4.20 | 5.53 | 7.10 | 8.50 | 2.5 |
| Average of two tests | | | | | 0.74 | 2.26 | 3.97 | 5.40 | 6.69 | 8.02 | 2.5 |
| ($Na_4EDTA$) | 12 | 1.42 | 1.0 | 26 | 0.93 | 2.92 | 5.66 | 10.16 | 11.92 | 13.22 | 13.5 |
| | | 0.89 | 1.0 | 41 | 0.99 | 3.35 | 7.21 | 10.70 | 13.25 | 15.68 | 14.0 |
| Average of two tests | | | | | 0.96 | 3.13 | 6.44 | 10.43 | 12.59 | 14.45 | 13.8 |
| (citric acid) | 12 | 1.43 | 1.0 | 25 | 0.98 | 3.33 | 7.02 | 12.02 | 15.04 | 16.60 | 17.0 |
| Hydroxylamine hydrochloride | 2,4 | 1.12 | 0.5 | 16 | 0.29 | 0.71 | 1.42 | 2.04 | 3.28 | 4.11 | 2.0 |
| Hydroxylamine hydrochloride | 2,4 | 1.76 | 2.0 | 41 | 1.82 | 4.97 | 8.39 | 9.18 | 11.90 | 14.50 | 3.5 |

Table 5

FLUID LOSS OF 75,6 l GELLED 28% HYDROCHLORIC ACID
(28% HCl, ~~20 gal~~/1000 J429, 0.4% A166)

| Fe(III) (ppm) | Hydroxylamine HCl (~~lb/1000 gal~~) g/l | Initial Leakoff Velocity (ml/min) | Temp (~~°F~~) °C | K(md) | 1 | 4 | 9 | 16 | 25 | 36 | Depth (cm) |
|---|---|---|---|---|---|---|---|---|---|---|---|
| 0 | ~~20~~ 2,4 | 0.5 | ~~150~~ 66 | 1.88 | 0.38 | 1.24 | 2.55 | 4.08 | 6.05 | 7.56 | 9.5 |
| | | | | 1.50 | 0.42 | 1.28 | 2.52 | 4.45 | 5.43 | 6.28 | 9.0 |
| | | | | 1.76 | 0.37 | 1.17 | 2.54 | 4.40 | 6.52 | 8.38 | 13.0 |
| | Average of three tests: | | | | 0.39 | 1.23 | 2.54 | 4.31 | 6.00 | 7.41 | 10.5 |
| 500 | ~~20~~ 2,4 | 0.5 | ~~150~~ 66 | 1.53 | 0.36 | 1.10 | 2.25 | 3.57 | 4.88 | 6.13 | 3.0 |
| | | | | 1.68 | 0.44 | 1.18 | 2.27 | 3.23 | 4.07 | 5.00 | 3.0 |
| | | | | 1.55 | 0.42 | 1.20 | 2.48 | 3.85 | 5.24 | 6.50 | 3.0 |
| | Average of three tests: | | | | 0.41 | 1.16 | 2.33 | 3.55 | 4.73 | 5.88 | 3.0 |
| 0 | ~~20~~ 2,4 | 1.0 | ~~150~~ 66 | 1.09 | 0.99 | 4.02 | 6.90 | 13.16 | 16.83 | 17.34 | 26.0 |
| | | | | 0.99 | 0.99 | 3.57 | 7.74 | 13.92 | 14.78 | 15.16 | 25.0 |
| | Average of two tests: | | | | 0.99 | 3.80 | 7.32 | 13.54 | 15.81 | 16.25 | 25.5 |
| 500 | ~~20~~ 2,4 | 1.0 | ~~150~~ 66 | 1.27 | 0.96 | 2.98 | 4.39 | 5.73 | 7.12 | 8.39 | 4.0 |
| | | | | 1.10 | 0.92 | 3.01 | 5.43 | 6.57 | 7.83 | 9.00 | 6.0 |
| | Average of two tests: | | | | 0.94 | 3.00 | 4.91 | 6.15 | 7.48 | 8.70 | 5.0 |
| 0 | ~~20~~ 2,4 | 1.0 | 93 ~~200~~ | 1.72 | 0.67 | 2.56 | 5.01 | 6.41 | 7.33 | 8.20 | 12.0 |
| | | | | 1.17 | 0.97 | 2.38 | 6.07 | 9.05 | 10.62 | 11.59 | 17.0 |
| | Average of two tests: | | | | 0.82 | 2.47 | 5.54 | 7.73 | 8.98 | 9.90 | 14.5 |
| 500 | ~~20~~ 2,4 | 1.0 | 93 ~~200~~ | 1.33 | 0.78 | 2.34 | 5.20 | 7.21 | 8.54 | 10.01 | 12.0 |
| | | | | 1.89 | 0.54 | 2.16 | 4.79 | 6.91 | 8.56 | 10.17 | 12.0 |
| | Average of two tests: | | | | 0.66 | 2.25 | 5.00 | 7.06 | 8.55 | 10.09 | 12.0 |
| 500 | 0 | 1.0 | 93 ~~200~~ | 1.11 | 0.75 | 2.31 | 4.08 | 5.95 | 7.49 | 8.95 | 3.5 |
| | | | | 1.78 | 0.50 | 1.68 | 2.83 | 4.06 | 5.19 | 7.53 | 2.5 |
| | Average of two tests: | | | | 0.63 | 2.00 | 3.46 | 5.01 | 6.34 | 8.24 | 3.0 |

Fluid Loss of Ungelled 28% HCl Containing 0.4% A166

| Fe(III) (ppm) | Hydroxylamine HCl | Initial Leakoff Velocity (ml/min) | Temp | K(md) | 1 | 4 | 9 | 16 | 25 | 36 | Depth (cm) |
|---|---|---|---|---|---|---|---|---|---|---|---|
| 0 | 0 | 0.5 | 66 ~~150~~ | 1.85 | 0.47 | 1.63 | 3.97 | 6.21 | 7.80 | 9.25 | 14.0 |
| | | | | 1.65 | 0.47 | 1.67 | 3.61 | 6.39 | 8.04 | 9.49 | 13.0 |
| | | | | 1.12 | 0.48 | 1.98 | 4.48 | 7.83 | 10.51 | 12.70 | 18.0 |
| | Average of three tests: | | | | 0.47 | 1.76 | 4.02 | 6.81 | 8.78 | 10.48 | 15.0 |
| 0 | 0 | 1.0 | 93 ~~200~~ | 1.34 | 0.99 | 3.99 | 8.24 | 11.63 | 14.28 | 17.62 | 19.0 |
| | | | | 1.34 | 0.90 | 3.45 | 6.59 | 8.77 | 10.60 | 12.58 | 15.0 |
| | | | | 1.02 | 1.00 | 3.76 | 7.33 | 9.43 | 11.34 | 13.45 | 19.0 |
| | Average of three tests: | | | | 0.96 | 3.74 | 7.39 | 9.94 | 12.07 | 14.55 | 17.7 |

TABLE 6

| PRESSURIZED ACID SPENDING TESTS (6 hrs @ 66 ° C) | | |
|---|---|---|
| 15% HCl, 0.4%. A166, 75,6 ℓ. J429 | | |
| Nitrogen Purge | Other Additives | Viscosity (cps) Fann 100 rpm |
| No | 500 ppm Fe(III) | 21.6 |
| Yes | 500 ppm Fe(III) | 30.6 |
| No | 500 ppm Fe(III), 10 kg hydrazine sulfate | 14.4 |
| Yes | 500 ppm Fe(III), 10 kg hydrazine sulfate | 31.8 |
| No | 500 ppm Fe(III), 10 kg hydroxylamine• HCl | 27.0 |
| No | 500 ppm Fe(III), 5 kg L58 | 12.6 |
| Yes | 500 ppm Fe(III), 5 kg L58 | 32.4 |
| No | 5 kg L58 | 16.2 |
| Yes | 5000 ppm Fe(III), 10 kg hydrazine sulfate, 2,5 kg J218 | 31.8 |
| Yes | 500 ppm Fe(III), 10 kg hydrazine sulfate, 0.072% hydrogen peroxide * | 9.6 |
| Yes | Same composition as previous test but mixed 24 hrs prior to spending. | 21.0 |

*Equivalent to 83 ℓ of 3% hydrogen peroxide per 3800 ℓ of acid.

**Claims**

**1.** An aqueous acid composition having properties suitable for use in fracture acidizing subterranean formations comprising

(a) an aqueous acid; and characterised in that it also comprises

(b) a polymeric gelling agent that crosslinks in the presence of ferric ions at a pH of about 2 or greater; and

(c) a soluble ferric salt in an amount sufficient to crosslink said polymeric gelling agent at a pH of about 2 or greater, but which does not crosslink said polymeric gelling agent at a pH below about 2; and

(d) an effective amount of a soluble reducing agent that will reduce substantially all of the ferric ion to ferrous ion at a pH of about 2 or greater;

however excluding compositions based on a 28 % aqueous hydrochloric acid solution containing 3,000, ppm of ferric chloride, about 0.55 wt% of an acrylamide/methacryloylethyltrimethyl ammonium carbide copolymer and about 0.24 wt% of sodium erythorbate.

**2.** An aqueous acid composition of Claim 1 wherein said acid is HCl.

**3.** An aqueous acid composition of Claim 2 wherein said polymeric gelling agent is an acid soluble or acid dispersible carboxyl-containing polymer.

**4.** An aqueous acid composition of Claim 3 wherein said carboxyl-containing polymer is a polyacrylamide.

**5.** An aqueous acid composition of Claim 3 wherein said carboxyl-containing polymer is a cationic polyacrylamide.

**6.** An aqueous acid composition of Claim 5 wherein said cationic polyacrylamide comprises 92.5 mole % acrylamide and 7.5 % dimethylaminoethylmethacrylate quaternary.

**7.** An aqueous acid composition of Claim 1 wherein said soluble ferric salt is selected from the group consisting of ferric chloride, ferric bromide and ferric sulfate.

**8.** An aqueous acid composition of Claim 1 wherein said soluble reducing agent is selected from the group consisting of hydrazine salts and hydroxylamine salts.

9. A method of fracture acidizing a subterranean formation penetrated by a bore hole comprising the step of contacting the subterranean formation, at a pressure and flow rate sufficient to create fracture acidizing of said formation with a composition comprising:
(a) an aqueous acid; and characterised in that it also comprises
(b) a polymeric gelling agent that crosslinks in the presence of ferric ions at a pH of about 2 or greater; and
(c) a soluble ferric salt in an amount sufficient to crosslink said polymeric gelling agent at a pH of about 2 or greater, but which does not crosslink said polymeric gelling agent at a pH below about 2; and
(d) an effective amount of a soluble reducing agent that will reduce substantially all the ferric ion to ferrous ion at a pH of about 2 or greater.

10. A method of fracture acidizing according to Claim 9 further comprising the step of maintaining the fracture acidizing conditions down hole for sufficient time to allow said acid to partially spend by reacting with the formation such as to increase the pH sufficiently to crosslink said polymeric gelling agent.

11. A method of fracture acidizing according to Claim 10 further comprising the step of maintaining the fracture acidizing conditions for sufficient time to allow said acid to sufficiently spend by reacting with the formation such as to allow said reducing agent to convert substantially all of said ferric ions to ferrous ions, thus reversing the crosslinking of said polymeric gelling agent.

12. A method of fracture acidizing according to Claim 9 wherein said acid is HCl and said polymeric gelling agent is an acid soluble or acid dispersible carboxyl-containing polymer.

13. A method of fracture acidizing according to Claim 9 wherein said acid is HCl; said polymeric gelling agent is an acid soluble or acid dispersible carboxyl-containing polymer; and said reducing agent is selected from the group consisting of hydrazine salts and hydroxylamine salts.

14. A method of fracture acidizing according to Claim 12 wherein said carboxyl-containing polymer is a polyacrylamide.

15. A method of fracture acidizing according to Claim 13 wherein said carboxyl-containing polymer is a polyacrylamide.

16. A method of fracture acidizing according to Claim 12 wherein said carboxyl-containing polymer is a cationic polyacrylamide comprising 92.5 mole % acrylamide and 7.5 % dimethylaminoethylmethacrylate quaternary.

17. A method of fracture acidizing according to Claim 13 wherein said carboxyl-containing polymer is a cationic polyacrylamide comprising 92.5 mole % acrylamide and 7.5 % dimethylaminoethylmethacrylate quaternary.

18. A method of creating a reversible crosslinked gel in an aqueous acid fracturing fluid comprising the steps of:
(a) admixing to an aqueous acid at a pH below about 2 an acid soluble or acid dispersible carboxyl-containing polymeric gelling agent, a crosslinking amount of a ferric salt adapted to crosslink said polymeric gelling agent at a pH about about 2 but not at a pH below about 2, and an effective amount of a reducing agent adapted to reduce ferric ions to ferrous ions at a pH approaching the pH of spent acid but not at a pH of live acid;
(b) partially spending the acid by contact with an acid neutralizing formation such as to initiate ferric ion crosslinking of said polymeric gelling agent; and
(c) fully spending the acid by further contact with an acid neutralizing formation such as to reduce the ferric ion to the ferrous ion reversing the crosslinking.

**Revendications**

1. Une composition aqueuse acide ayant des propriétés propres à l'emploi dans la fracturation avec des acides de formations souterraines, composition qui comprend :

a) un acide aqueux ; et qui se caractérise en ce qu'elle comprend également :

b) un agent gélifiant polymère qui se réticule en présence d'ions ferriques à un pH d'environ 2 ou plus ;

c) un sel ferrique soluble dans une proportion suffisante pour réticuler l'agent gélifiant polymère à un pH d'environ 2 ou plus, mais qui ne réticule pas cet agent à un pH inférieur à 2 environ ; et

d) une proportion efficace d'un agent réducteur soluble qui réduit pratiquement la totalité des ions ferriques en ions ferreux à un pH d'environ 2 ou plus ;

à l'exclusion toutefois de compositions à base d'une solution aqueuse à 28 % d'acide chlorhydrique contenant 3.000 ppm de chlorure ferrique, environ 0,55 % en poids d'un copolymère d'acrylamide et de chlorure de méthacryloyléthyltriméthyl-ammonium et environ 0,24 % en poids d'érythorbate de sodium.

**2.** Composition de la revendication 1 dont l'acide est HCl.

**3.** Composition de la revendication 2 dont l'agent gélifiant polymère est un polymère carboxylique soluble ou pouvant se disperser dans l'acide.

**4.** Composition de la revendication 3 dont le polymère carboxylique est un polyacrylamide.

**5.** Composition de la revendication 3 dont le polymère carboxylique est un polyacrylamide cationique.

**6.** Composition de la revendication 5 dans laquelle le polyacrylamide cationique est formé de 92,5 mole % d'acrylamide et de 7,5 mole % de méthacrylate de diméthylaminoéthyle quaternaire.

**7.** Composition de la revendication 1 dans laquelle le sel ferrique soluble est choisi parmi le chlorure, le bromure et le sulfate ferrique.

**8.** Composition de la revendication 1 dans laquelle l'agent réducteur soluble est choisi parmi des sels d'hydrazine et des sels d'hydroxylamine.

**9.** Une méthode d'acidification de la fracture d'une formation souterraine pénétrée par un trou de forage, méthode qui comprend la mise au contact de la formation, à une pression et à un débit suffisants pour créer la fracture et l'acidifier, avec une composition comprenant :

a) un acide aqueux ; et qui se caractérise en ce qu'elle comprend également :

b) un agent gélifiant polymère qui se réticule en présence d'ions ferriques à un pH d'environ 2 ou plus ;

c) un sel ferrique soluble dans une proportion suffisante pour réticuler cet agent gélifiant polymère à un pH d'environ 2 ou plus, mais qui ne le réticule pas à un pH inférieur à 2 environ ; et

d) une proportion efficace d'un agent réducteur soluble qui réduit pratiquement la totalité des ions ferriques en ions ferreux à un pH d'environ 2 ou plus.

**10.** Une méthode selon la revendication 9 qui comprend également le maintien des conditions acidifiantes de la fracture au bas du forage pendant un temps suffisant pour que l'acide puisse s'épuiser partiellement par neutralisation par réaction avec la formation, de manière à élever suffisamment le pH pour que l'agent gélifiant polymère soit réticulé.

**11.** Une méthode selon la revendication 10 qui comprend en outre le maintien des conditions acidifiantes de la fracture pendant un temps suffisant pour que l'acide puisse s'épuiser suffisamment en réagissant avec la formation, de manière que l'agent réducteur puisse transformer la quasi totalité des ions ferriques en ions ferreux, en inversant ainsi la réticulation de l'agent gélifiant polymère.

**12.** Une méthode selon la revendication 9 dans laquelle l'acide est HCl et l'agent gélifiant polymère un polymère carboxylique soluble ou pouvant se disperser dans l'acide.

**13.** Une méthode selon la revendication 9 dans laquelle l'acide est HCl, l'agent gélifiant polymère un polymère carboxylique soluble ou pouvant se disperser dans l'acide et l'agent réducteur est choisi parmi des sels d'hydrazine et des sels d'hydroxylamine.

**14.** Une méthode selon la revendication 12 dans laquelle le polymère carboxylique est un polyacrylamide.

**15.** Une méthode selon la revendication 13 dans laquelle le polymère carboxylique est un polyacrylamide.

**16.** Une méthode selon la revendication 12 dans laquelle le polymère carboxylique est un polyacrylamide cationique formé de 92,5 mole % d'acrylamide et de 7,6 mole % de méthacrylate de diméthylaminoéthyle quaternaire.

**17.** Une méthode selon la revendication 13 dans laquelle le polymère carboxylique est un polyacrylamide cationique formé de 92,5 mole % d'acrylamide et de 7,6 mole % de méthacrylate de diméthylaminoéthyle quaternaire.

**18.** Une méthode de formation d'un gel réticulé de façon réversible dans un liquide de fracturation acide aqueux, selon laquelle :

a) on mélange à un acide aqueux, à un pH inférieur à 2 environ, un agent gélifiant polymère carboxylique soluble ou dispersable dans l'acide, une proportion d'un sel ferrique, propre à réticuler l'agent gélifiant à un pH d'environ 2 mais pas à un pH inférieur à 2 environ, et une proportion d'un réducteur pour réduire les ions ferriques en ions ferreux à un pH voisin de celui de l'acide épuisé mais pas à un pH d'acide non-épuisé ;

b) on laisse l'acide s'épuiser partiellement par contact avec une formation qui le neutralise pour amorcer la réticulation de l'agent gélifiant polymère avec les ions ferriques ; et

c) on laisse l'acide s'épuiser totalement en poursuivant sa mise en contact avec la formation neutralisante pour réduire les ions ferriques en ions ferreux, ce qui inverse la réticulation.

## Patentansprüche

**1.** Wässrige Säurezusammensetzung, die Eigenschaften geeignet für die Verwendung zur sauren Frakturierung unterirdischer Formationen besitzt, umfassend:

(a) eine wässrige Säure; und dadurch charakterisiert, daß sie ebenfalls umfasst

(b) ein in Anwesenheit von Eisen(III)-Ionen bei einem pH von etwa 2 oder größer quervernetzendes polymeres Geliermittel; und

(c) ein lösliches Eisen(III)-Salz in einer Menge, ausreichend um das polymere Geliermittel bei einem pH von etwa 2 oder größer zu quervernetzen, welches aber das polymere Geliermittel bei einem pH kleiner als etwa 2 nicht quervernetzt; und

(d) eine wirksame Menge eines löslichen Reduktionsmittels, das im wesentlichen alle Eisen(III)-Ionen bei einem pH von etwa 2 oder größer zu Eisen(II)-Ionen reduziert;

ausgeschlossen werden jedoch Zusammensetzungen basierend auf einer 28% wässrigen Salzsäure Lösung, die 3000 ppm Eisen(III)-Chlorid, etwa 0,55 Gew.-% eines Acrylamid/methacryloylethyltrimethyl-ammoniumchlorid Copolymers, und etwa 0,24 Gew.-% Natrium-Erythorbat enthält.

**2.** Wässrige Säurezusammensetzung nach Anspruch 1, wobei die Säure Salzsäure (HCl) ist.

**3.** Wässrige Säurezusammensetzung nach Anspruch 2, wobei das polymere Geliermittel ein säurelösliches oder Säure dispergierbares, Carboxylhaltiges Polymer ist.

**4.** Wässrige Säurezusammensetzung nach Anspruch 3, wobei das Carboxylhaltige Polymer ein Polyacrylamid ist.

**5.** Wässrige Säurezusammensetzung nach Anspruch 3, wobei das Carboxylhaltige Polymer ein kationisches Polyacrylamid ist.

**6.** Wässrige Säurezusammensetzung nach Anspruch 5, wobei das kationische Polyacrylamid 92,5 Mol-% Acrylamid und 7,5% quarternäres Dimethylaminoethylmethacrylat enthält.

**7.** Wässrige Säurezusammensetzung nach Anspruch 1, wobei das lösliche Eisen(III)-Salz ausgewählt ist aus der Gruppe bestehend aus Eisen(III)-chlorid, Eisen(III)-bromid und Eisen(III)-sulfat.

**8.** Wässrige Säurezusammensetzung nach Anspruch 1, wobei das lösliche Reduktionsmittel ausgewählt ist aus der Gruppe bestehend aus Hydrazin-Salzen und Hydroxylamin-Salzen.

**9.** Verfahren zur sauren Frakturierung einer durch ein Bohrloch durchdrungenen unterirdischen Formation, den Schritt umfassend, die unterirdische Formation bei einem zur Hervorbringung einer sauren Frakturierung der Formation genügend hohen Drucks und genügend hohen Flußrate mit einer Zusammensetzung in Kontakt zu bringen, die umfasst:
(a) eine wässrige Säure; und daurch charkterisiert, daß sie auch umfasst,
(b) ein in in der Anwesenheit von Eisen(III)-Ionen bei einem pH von etwa 2 oder größer quervernetzendes polymeres Geliermittel; und
(c) ein in einer Menge, zur Quervernetzung des polymeren Geliermittels bei einem pH von etwa 2 oder größer, ausreichend vorhandenes lösliches Eisen(III)-Salz, das aber das polymere Geliermittel bei einem pH von unterhalb etwa 2 nicht quervernetzt; und
(d) eine wirksame Menge eines löslichen Reduktionsmittel, das im wesentlichen bei einem pH von 2 oder größer alle Eisen(III)-Ionen zu Eisen(II)-Ionen reduziert.

**10.** Verfahren zur sauren Frakturierung nach Anspruch 9, weiter umfassend den Schritt, daß die sauren Frakturierungs Bedingungen im Schacht genügend lang aufrechterhalten werden, damit die Säure teilweise durch die Reaktion mit der Formation verbraucht wird, derart, daß der pH ausreichend erhöht wird, um das polymere Geliermittel querzuvernetzen.

**11.** Verfahren zur sauren Frakturierung nach Anspruch 10, weiter umfassend den Schritt, die sauren Frakturierungs-Bedingungen genügend lange aufrechtzuerhalten, damit die Säure ausreichend durch die Reaktion mit der Formation verbraucht wird, dergestalt, daß das Reduktionsmittel im wesentlichen alle Eisen(III)-Ionen zu Eisen(II)-Ionen umwandelt um dadurch die Quervernetzung des polymeren Geliermittels rückgängigzumachen.

**12.** Verfahren zur sauren Frakturierung nach Anspruch 9, wobei die Säure Salzsäure (HCL) ist und das polymere Geliermittel ein säurelösliches oder in Säure dispergierbares, Carboxylhaltiges Polymer darstellt.

**13.** Verfahren zur sauren Frakturierung nach Anspruch 9, wobei die Säure Salzsäure (HCl) ist; das polymere Geliermittel ein säurelösliches oder in Säure dispergierbares, Carboxylhaltiges Polymer ist; und das Reduktionsmittel ausgewählt wird aus der Gruppe bestehend aus Hydrazin-Salzen und Hydroxylamin-Salzen.

**14.** Verfahren zur sauren Frakturierung nach Anspruch 12, wobei das Carboxylhaltige Polymer ein Polyacrylamid darstellt.

**15.** Verfahren zur sauren Frakturierung nach Anspruch 13, wobei das Carboxylhaltige Polymer ein Polyacrylamid darstellt.

**16.** Verfahren zur sauren Frakturierung nach Anspruch 12, wobei das Carboxylhaltige Polymer ein kationisches Polacrylamid darstellt, das 92,5 Mol-% Acrylamid und 7,5% quarternäres Dimethylaminoethylmethacrylat enthält.

**17.** Verfahren zur sauren Frakturierung nach Anspruch 13, wobei das Carboxylhaltige Polymer ein kationisches Polyacrylamid darstellt, das 92,5 Mol-% Acrylamid und 7,5% quarternäres Dimethylaminoethylmethacrylat enthält.

**18.** Verfahren zur Herstellung eines reversibel quervernetzten Gels in einer wässrigen sauren Frakturierungs-Flüssigkeit, die Schritte umfassend:
(a) ein säurelösliches oder in einer Säure dispergierbares Carboxylhaltiges polymeres Geliermittel, eine quervernetzende Menge eines zur Quervernetzung des polymeren Geliermittels bei einem pH von etwa 2, aber nicht bei einem pH von unter etwa 2 geeigneten Eisen-Salzes, und eine wirksame Menge eines bei einem pH, um den pH der verbrauchten Säure herum, aber nicht bei einem pH der frischen Säure zur Reduktion von Eisen(III)-Ionen zu Eisen(II)-Ionen geeigneten Reduktionsmittels zu einer wässrigen Säure bei einem pH von etwa 2 zuzumischen;
(b) teilweise die Säure durch den Kontakt mit einer Säure-neutralisierenden Formation zu verbrauchen, dergestalt, daß die durch die Eisen(III)-Ionen initiierte Quervernetzung des polymeren Geliermittel beginnt; und

(c) vollständiger Verbrauch der Säure durch weiteren Kontakt mit einer Säure-neutralisierenden Formation, dergestalt, daß die Eisen(III)-Ionen zu Eisen(II)-Ionen reduziert werden und die Quervernetzung rückgängig gemacht wird.

FIGURE 1

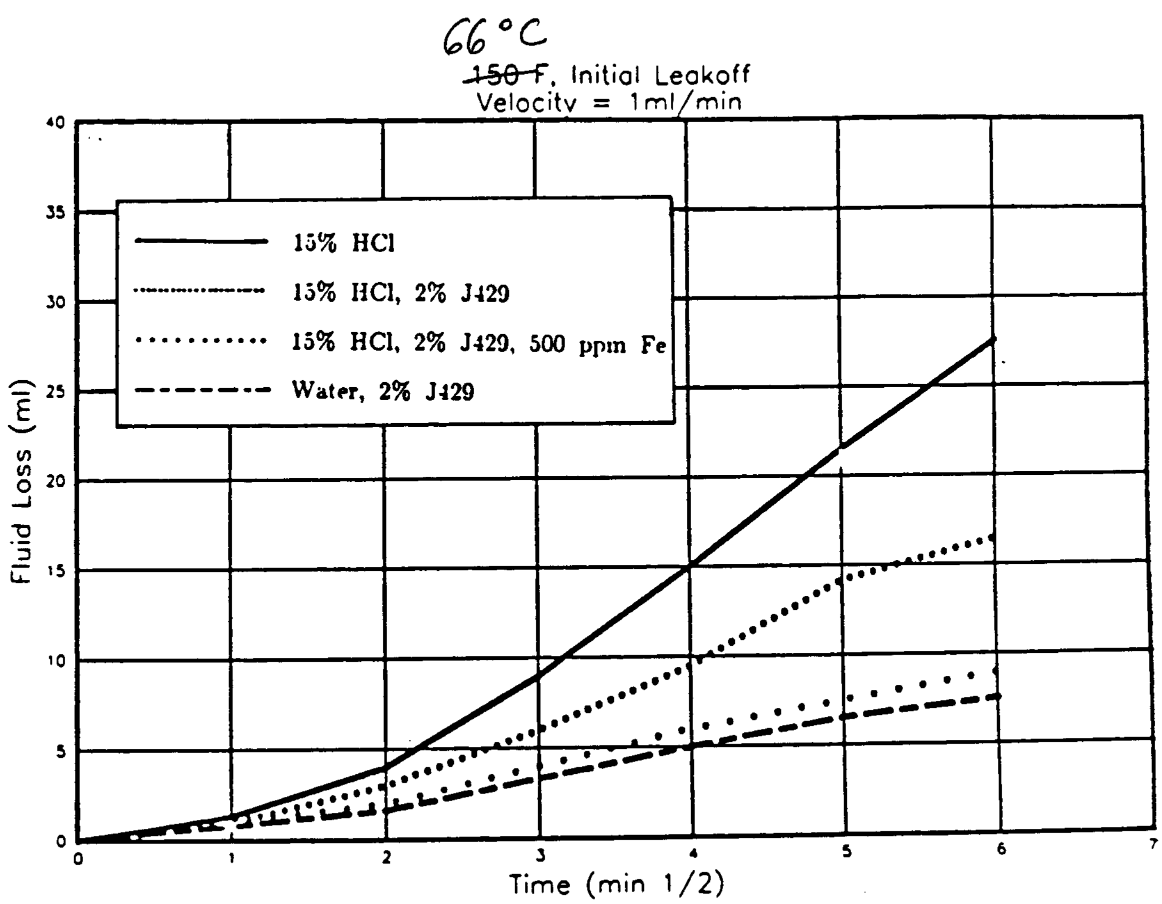
66 °C
150 F, Initial Leakoff
Velocity = 1ml/min
15% HCl
15% HCl, 2% J429
15% HCl, 2% J429, 500 ppm Fe
Water, 2% J429
Fluid Loss (ml)
Time (min 1/2)
0
5
10
15
20
25
30
35
40
1
2
3
4
5
6
7

FIGURE 2

FLUID LOSS OF 15% HCl

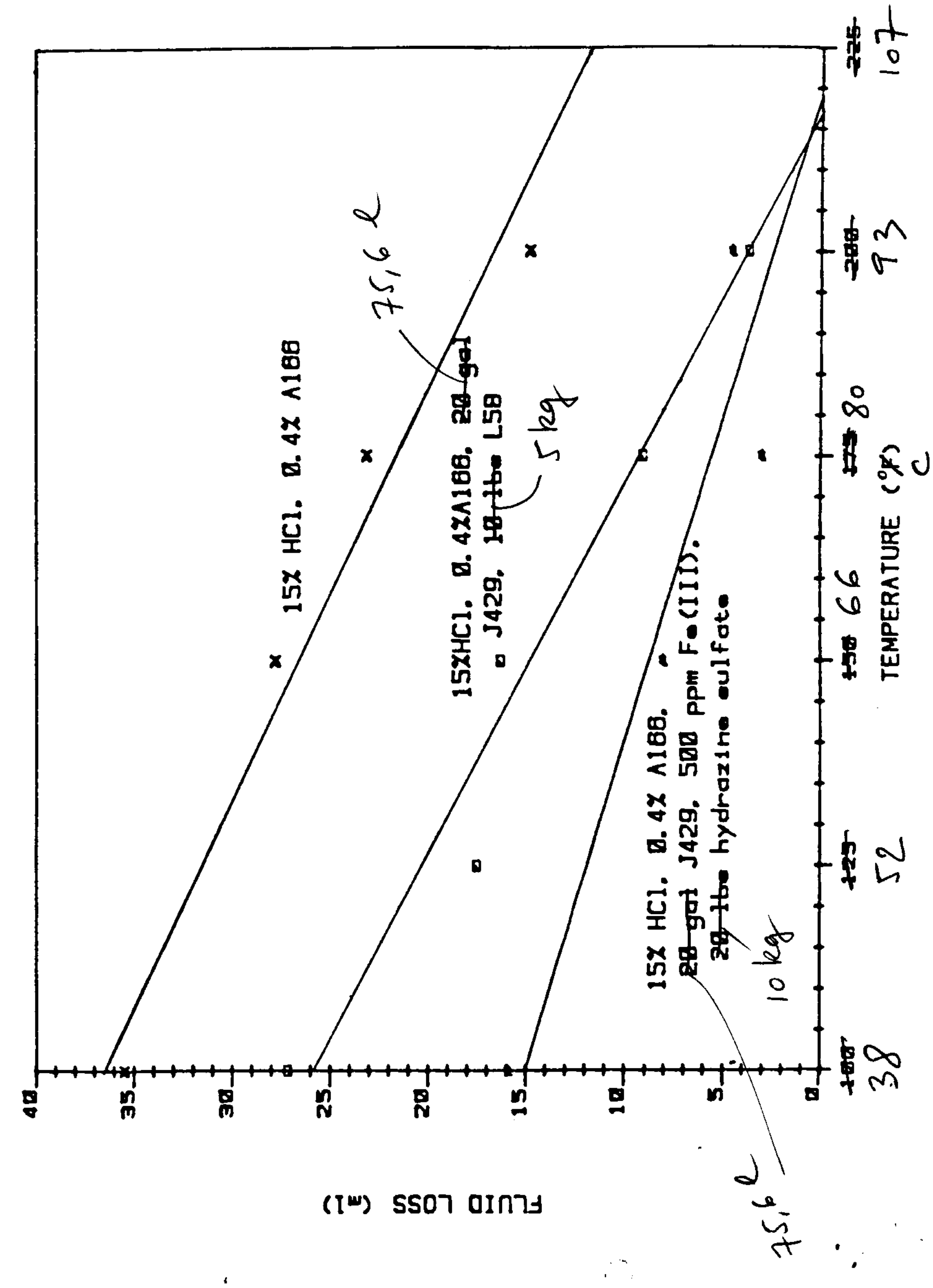

FIGURE 3
WORMHOLE DEPTH WITH 15% HCl

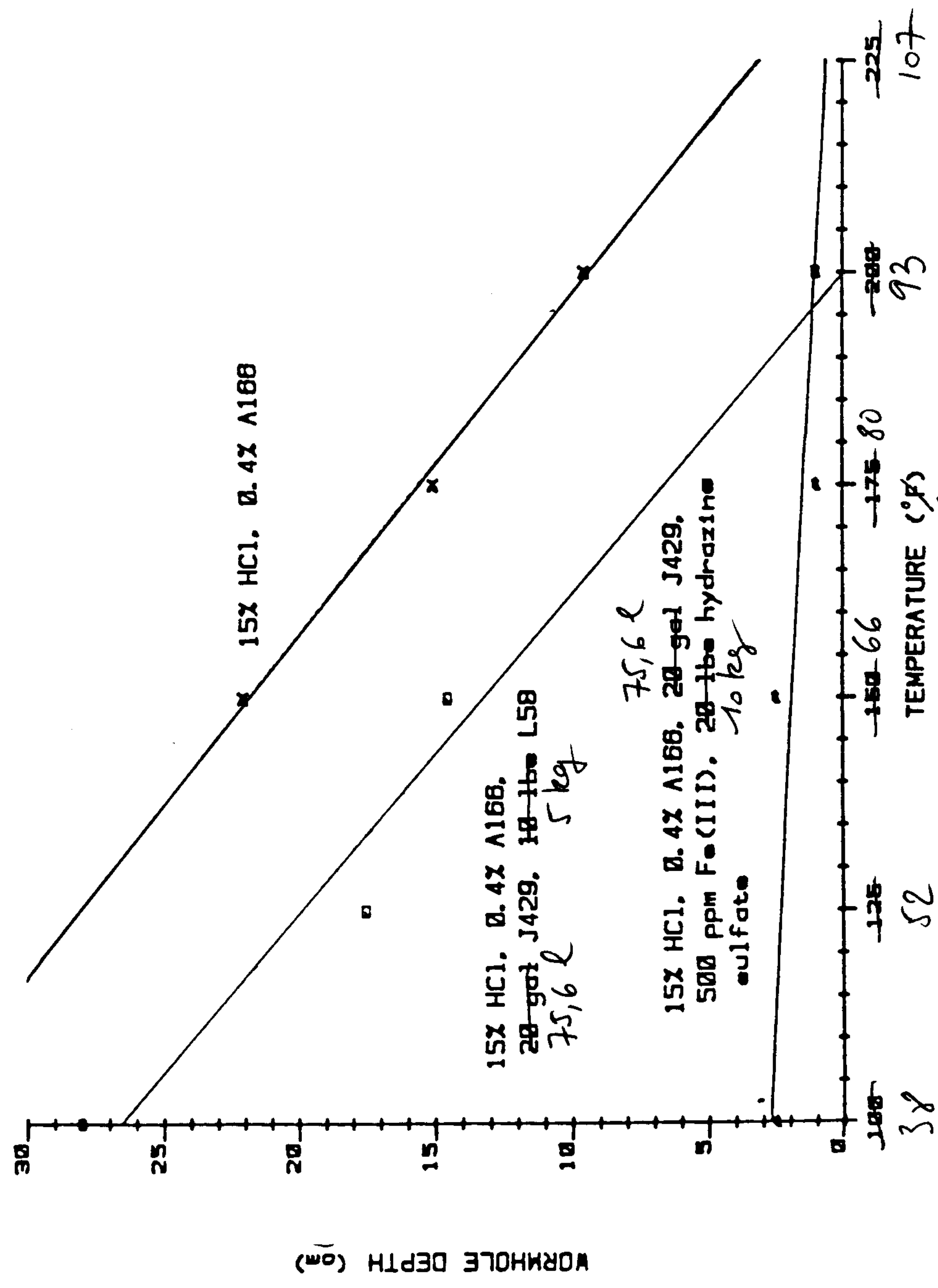

FIGURE 4

GELLED ACID FLUID LOSS AS COMPARED TO 15% HCl

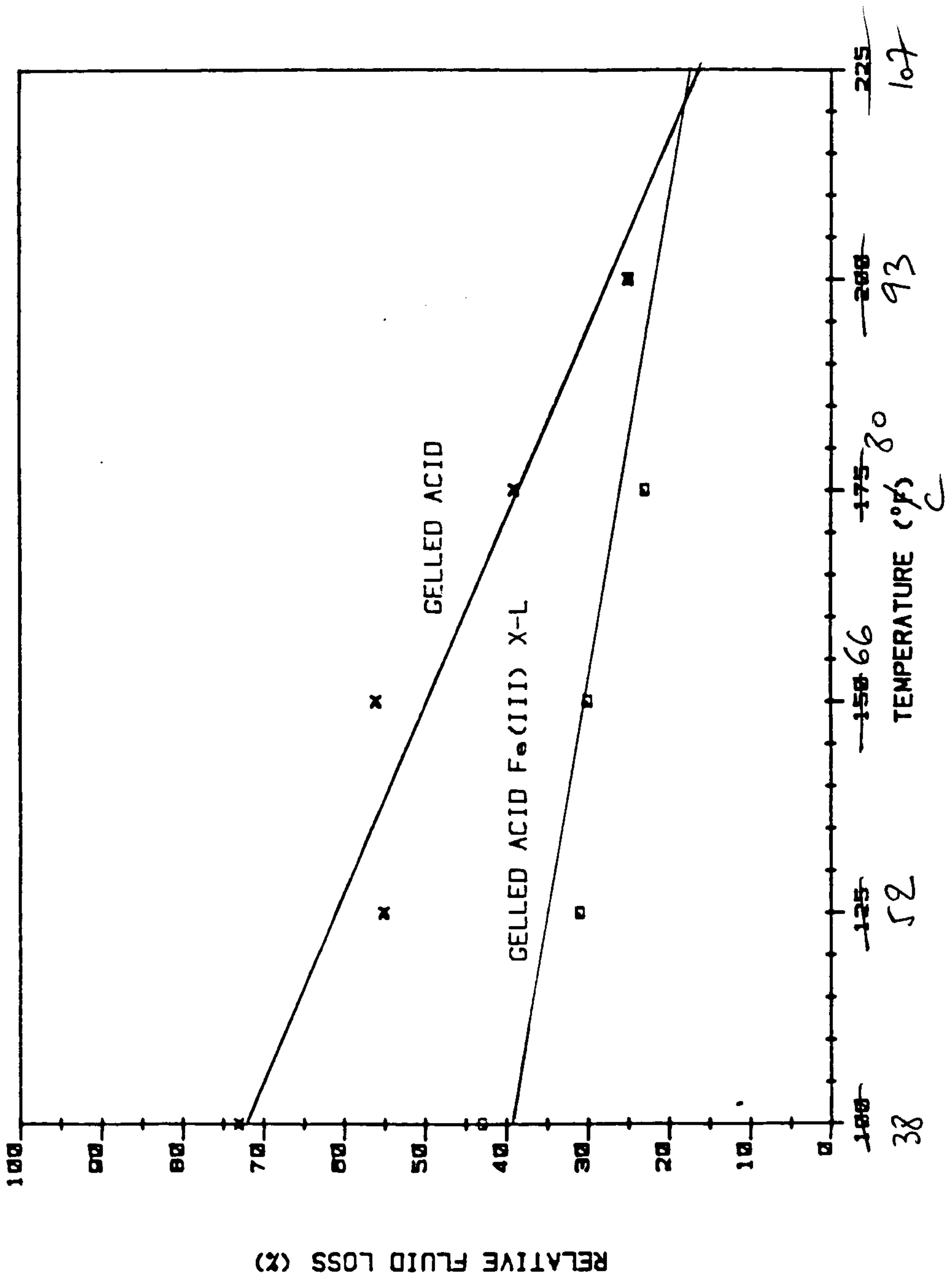

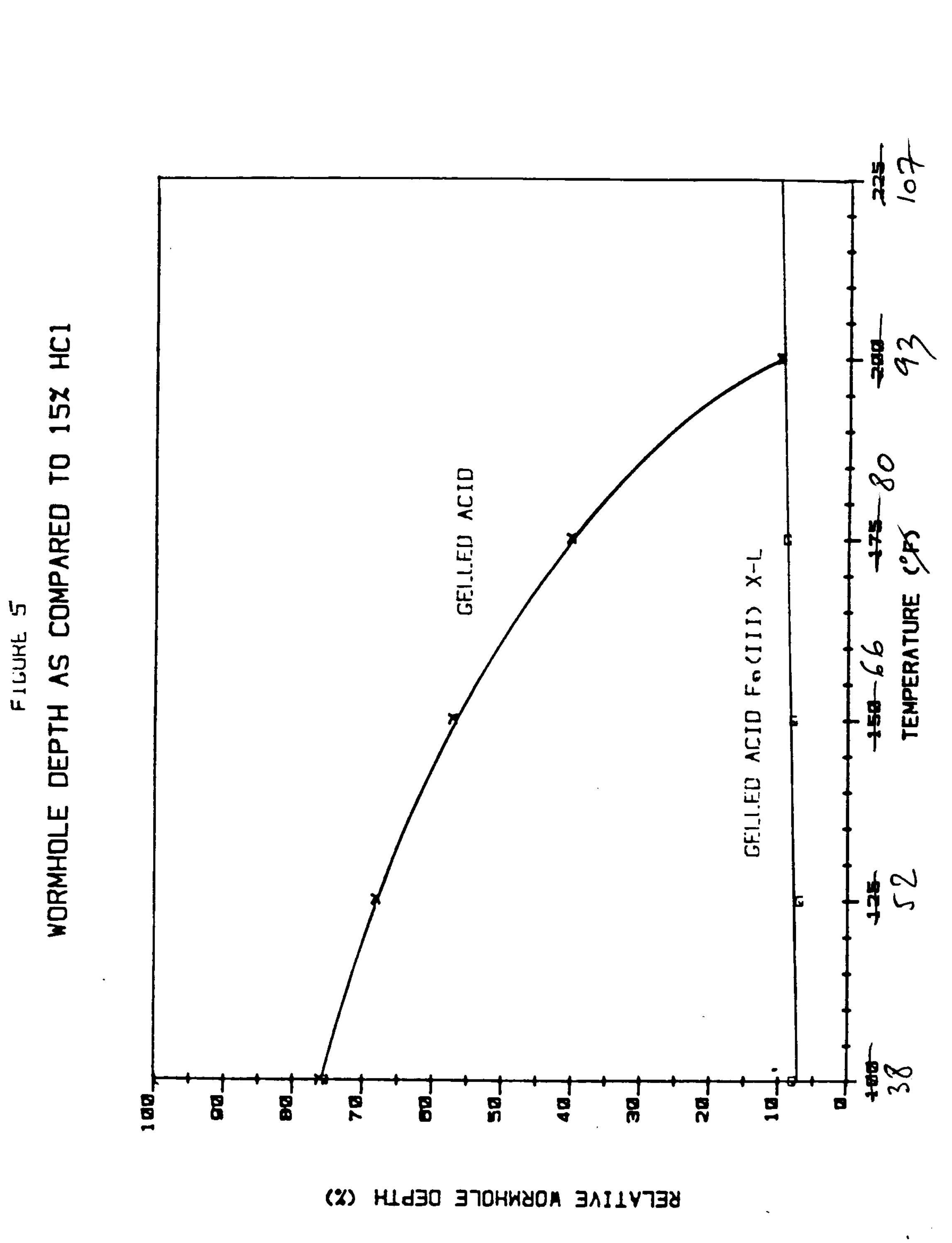
FIGURE 5
WORMHOLE DEPTH AS COMPARED TO 15% HCl
GELLED ACID
GELLED ACID Fe(III) X-L
RELATIVE WORMHOLE DEPTH (%)
0
10
20
30
40
50
60
70
80
90
100
TEMPERATURE (°F)
100
125
150
175
200
225
38
52
66
80
93
107
°C

FIGURE 6

EFFECT OF CONFINEMENT PRESSURE ON APPARENTMENT PERMEABILITY OF FRACTURED CORES

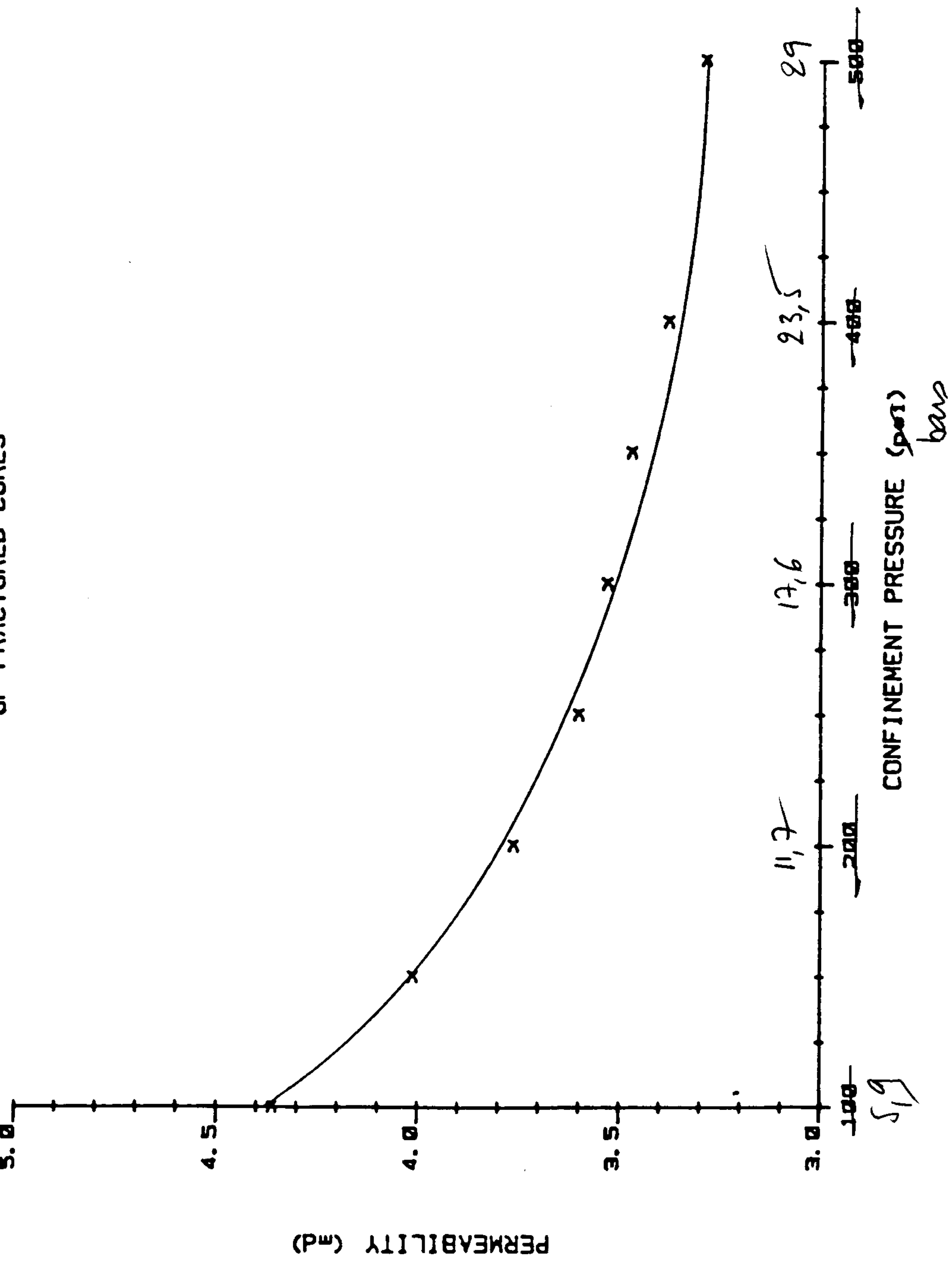

FIGURE 7

FLUID LOSS OF 15% HCl TO FRACTURED CORES

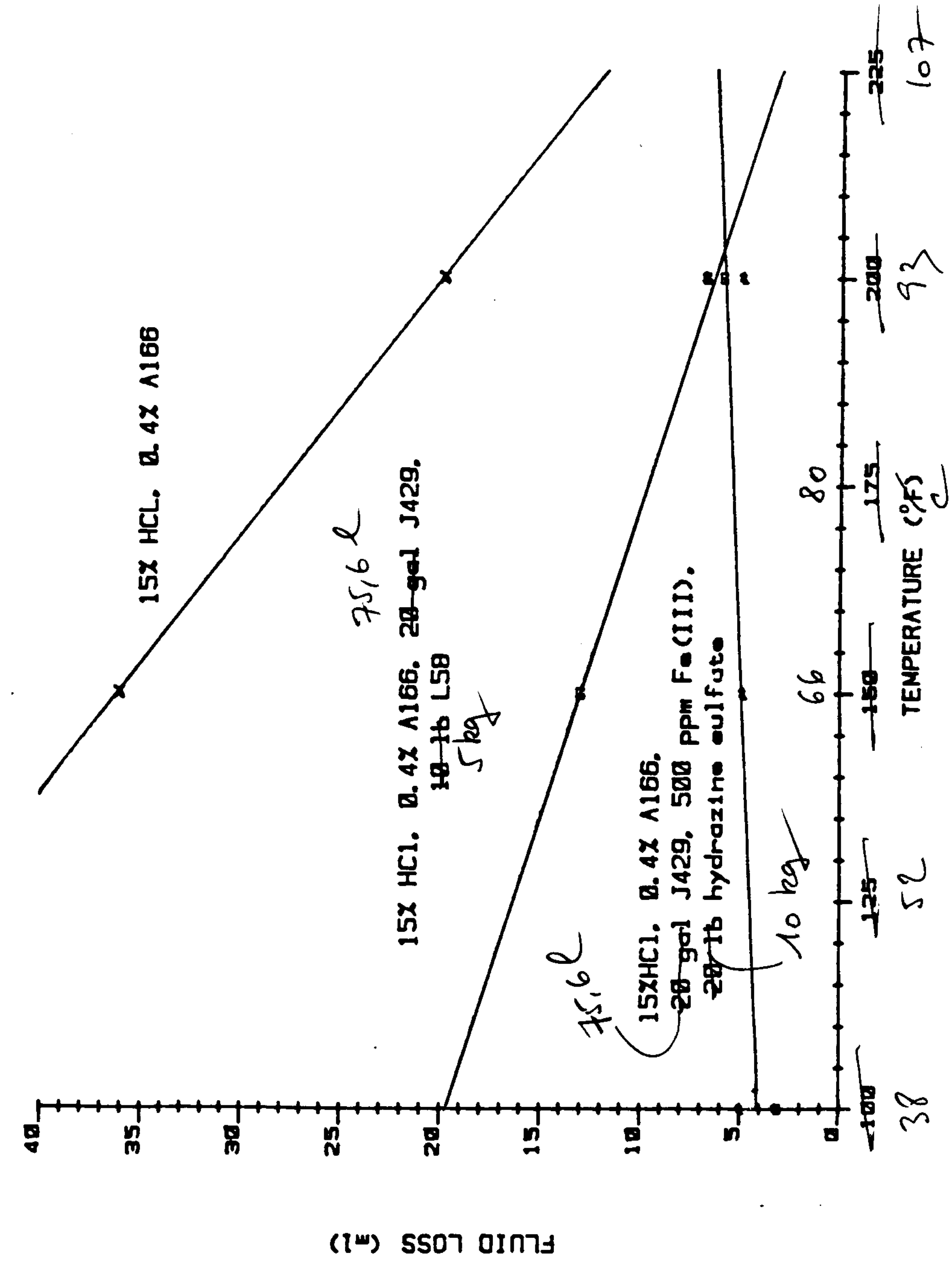

FIGURE 8

ACID SPENDING TEST APPARATUS